# EUROPEAN PATENT APPLICATION

(11) **EP 3 163 211 A1**
(43) Date of publication of application: **03.05.2017**
(21) Application number: 16178264.4
(22) Date of filing: 06.07.2016
(51) Int. Cl.: F24J 2/04, F24J 2/52, E04D 13/18

(54) **AN ENERGY TRANSPORT SYSTEM FOR USE ON A ROOF AND ITS USE**

(30) Priority: 06.07.2015 NL 2015098
(71) Applicant: ZEP B.V., 8321 MK Urk (NL)
(72) Inventor: SNOEKS, Ferdy, 1363 TA Almere-Poort (NL); BAKKER, Jan, 8322 AL Urk (NL)
(74) Representative: Plaggenborg, Menko Bernard

(57) **Abstract**

The invention relates to a heat transport system for a roof, comprising a heat dissipation device (1) with a heat conductive member (2) and a receiving member (8) connected thereto in a heat conducting relationship for receiving a pipe (9) embodied for flowing there through a fluid for dissipating heat energy that is absorbed by said member. The system is **characterized in that** the heat conductive member (2) is embodied for positioning between a roof covering and the roof, and in that the member (2) comprises at least a provision, for example a recess (3, 4), for receiving a suspension member of the roof covering.

The invention also relates to a method for using the heat transport system of the invention.

## Description

The present invention relates to an energy transport system for use on a roof according to the preamble of claim 1.

Such system is known in the art. For example, solar collectors are known that are placed on a roof and that have a large heat absorbing capacity due to their inherent black color. Pipes that are placed in a heat exchanging relationship and that carry a heat carrier dissipate the absorbed heat, for example for collection in a boiler, optionally for further heating. The energy savings for the occupants of a house with solar collectors may be considerable.

A disadvantage of this known system is the visual impact of the solar collectors on the appearance of the roof. The solar collector is placed instead of an existent roof covering or is placed over the existing roof covering. The original roof tiles are thus no longer visible. For this reason, they often do not stand the test of the Review Committee. In that case, use is not possible.

Therefore, there is a practical need for an improved system that can be used without interfering with the appearance of an existing roof covering.

The invention aims at providing an improved system of the kind mentioned in the preamble.

The invention especially aims at providing a system of the kind mentioned in the preamble that does not change the appearance of a roof with a covering of roof tiles.

The invention also aims at providing an improved system that dissipates heat energy at a high efficiency.

SO as to obtain at least one of these aims, according to a first embodiment the invention provides an energy transport system comprising the features of claim 1. This system has the advantage that the original roof covering may remain at its position such that the appearance of the roof is not altered. In particular, with the use of roof tiles or when solar panels have already been installed on the roof, this is of utmost advantage.

It has also shown that the system according to the present invention has a very high energy yield. The temperature of a roof under a roof covering, such as under a roof tile, is surprisingly much higher than is known from conventional solar collectors, so that more energy can be extracted in a simple and aesthetically appealing manner than would be expected on the basis of the prior art. Such a synergistic effect is completely unexpected.

For example, a suspension lug of a roof tile can be received in said provision. The provision may be a recess in which the lug is received, such that the combination of the device according to the present invention and the roof tile can be suspended from a tile lath, or may be a recess in the device's material in which the lug is received, such that the roof tile is suspended from the tile lath while hanging on said lug. Hereafter, it will be substantially assumed that said provision is a recess.

It is especially preferred that, in the heat transport system according to the present invention, the heat conductive member is embodied for positioning against a roof side of the roof covering and the receiving member is positioned near the at least one provision, for example the at least one recess, for said suspension lug. As a consequence, the present invention can be effectively used within the existing construction of a slant roof that is embodied for covering with a roof covering, for example roof tiles or solar panels.

A suitable fixation of the pipe in the receiving member may be obtained when fixedly receiving the pipe therein. Such may for example be obtained by applying a pipe shaped receiving member through which a pipe can be pulled through after placing the heat dissipation device under the roof covering. A suitable clamping of the pipe in the receiving member can preferably also be obtained when a cross section of the receiving member has a circular segment of between 180° and 260°, preferably between 180° and 220°. Such allows one to apply a somewhat flexible, deformable pipe in a range of diameters, wherein the pipe at all times will be retained in the receiving member when pushed therein and such that it is clampingly held therein, whereas an adequate and secure contact with the receiving member is obtained. An optimum exchange of heat is obtained when the pipe abuts the surface of the receiving member substantially completely.

Preferably, the receiving member is provided over substantially the full width of the heat dissipation device. It has shown that this yields an optimum dissipation of heat from the heat conductive member towards the pipe. However, the receiving member may for example also be provided with tabs that are positioned alternately placed above and below, wherein the pipe is woven between these tabs. Another possibility exists in the fact that the receiving member is comprised of two legs, that may or may not be embodied continuously, said legs optionally together with said stop element making a receiving member, with a cross sectional circular segment of between 180° and 260°, preferably between 180° and 220°.

An efficient dissipation of heat is also obtained especially when the material of the heat transport system according to the present invention comprises a heat conductive material. Said material should have a high thermal conductivity, preferably of at least 0.5 W/mK, and more preferably at least 1,2 W/mK, and is preferably chosen from a metal, preferably at least one of aluminum and copper.

In particular, the efficiency is optimized when the heat conductive member and the receiving member are manufactured from at least one of aluminum and copper.

A simple combination of the heat dissipation device and a roof tile can be obtained when the heat conductive member extends in a first main plane and comprises near the edge that is positioned near the at least one provision, for example the at least one recess for said suspension member, a locking member for receiving therein part of the roof tile. By locking the roof tile in this way up in the locking member, the combination of heat dissipation device and roof tile can be simply installed on a roof. A roofer can easily hold the combination of tile and heat dissipation device with one hand and install same.

The locking member may advantageously be comprised of a stop element that extends from the heat conductive member and a shoulder connected to the stop element at a distant from said heat conductive member for locking up at least part of the roof tile between the heat conductive member and the shoulder. For example, the part of a roof tile that is positioned at a highest position when in use (i.e. when installed on a roof) may be locked up in the locking member. An advantage of such embodiment is that the roof tile installed above this roof tile may be placed over the shoulder, with the consequence that the shoulder is not visible from the outside.

An efficient embodiment is also obtained when the receiving member is coupled to the locking member. Such yields an optimum heat exchange due to a limited number of parts and the short path traveled by the heat energy from the heat conductive member to the receiving member and the pipe placed therein.

A roof tile can simply and accurately be received in the locking member when the shoulder is positioned substantially parallel with respect to said main plane.

As a matter of fact, it is preferred that the shape of the heat conductive member and the shoulder are substantial in correspondence with the shape of the roof tile. As a consequence, an optimum heat exchange from roof tile to the heat conductive member may be obtained. An advantage of the invention is that for that reason the heat conductive member may be adapted to the shape of any roof tile. Both flat roof tiles and roof tiles with one or more arches may be provided with the heat transport system according to the present invention.

A secure and long lasting heat conductive contact may be obtained by coupling at least part of the heat transport system to the roof tile by using a heat conducting adhesive agent.

A special use is found in installing the heat transport system according to the present invention behind flat or arched roof tiles. For, in such applications the heat transport system may be suitably used on other surfaces than slant roofs, for example on roof terraces and the like.

According to a further embodiment, the invention relates to a method for dissipating heat from a position between a roof and a roof covering, in particular a roof tile, using the heat transport system according to any of the previous claims, comprising the step of positioning the heat dissipation device against the roof covering, positioning a suspension lug of the roof covering in the at least one provision, and suspending the roof covering from a tile lath, such that the heat conductive member is positioned between the roof and the roof covering, and positioning a pipe in the receiving member, said pipe comprising a fluid flowing there through for dissipating heat energy absorbed by said member. With such method, the advantages as mentioned above are obtained.

Especially preferred is a method comprising the step of positioning on a roof a series of roof tiles with a heat dissipation device beneath at least some of said roof tiles, and positioning in the receiving members of the heat dissipation devices a pipe with a fluid flowing there through for dissipating heat energy that has been absorbed by said member. By providing an as large as possible number of roof tiles in a row with the heat dissipation device according to the present invention a large amount of energy can be collected from the roof.

The invention is not only applicable beneath roof tiles, but beneath other roof coverings as well, like panels, amongst which solar panels. The invention therefore also relates to a method comprising the step of placing on a roof a series of solar panels with a heat dissipation device beneath at least part of the solar panels, and positioning in the receiving members of the heat dissipation devices a pipe with a fluid flowing there through for dissipating heat energy that was absorbed by said member.

A further improvement of the efficiency can be obtained by a method further comprising adding the fluid that is heated in the pipe to a heat exchanger. Preferably, the fluid is added to a heat pump.

An optimum use is obtained by the method further comprising the step of returning to the pipe fluid that is received from the heat exchanger or from the heat pump, yielding a very efficient heat yield cycle.

Hereafter, the invention will be elaborated by means of a drawing. The drawing shows in:
Fig. 1 a perspective view of a heat dissipation device according to the present invention,
Fig. 2 a cross-sectional side view of a part of a heat dissipation device according to the present invention,
Fig. 3 a perspective view of a heat dissipation device according to the present invention in combination with a roof tile.

In the drawing, the same parts are denoted by means of the same reference numerals. However, for ease of understanding the drawing, not all parts that are required for a practical embodiment are shown in the drawing.

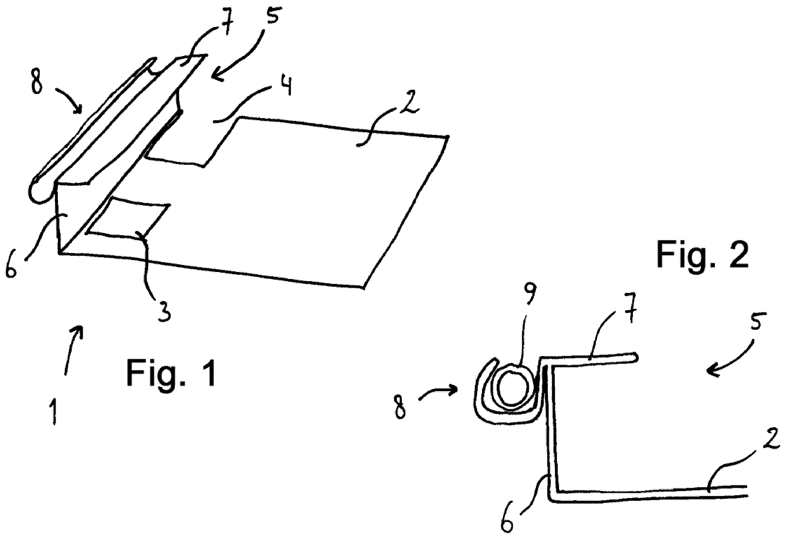

Fig. 1 shows a perspective view of a heat dissipation device 1 according to the present invention. The heat dissipation device 1 comprises a heat conductive member 2, substantially in the shape of a flat plate 2 that can be positioned against a back side (that is the roof side) of a roof tile. As will be known, a roof tile is provided with (usually) two lugs with which the roof tile can be suspended from a tile lath. The lugs protrude from an edge at the back side of the roof tile. For that reason, the heat dissipation device 1 comprises in the embodiment shown two recesses 3, 4 for receiving therein said lugs. In the embodiment shown, the recesses 3, 4 are provided in the heat conductive member 2.

Next to the recesses 3, 4 the heat conductive member 2 extends towards a locking member 5 with which a roof tile can be locked up against the heat dissipation device 1. The heat conductive member 2 is coupled to the locking member 5 in a heat exchanging relationship, and is preferably connected thereto. For example, the heat conductive member may be a monobody together with the locking member 5.

The locking member 5 is comprised of a stop element 6 that protrudes from a plane of the heat conductive member 2 and a shoulder 7 connected thereto. The heat conductive member 2, the stop element 6 and the shoulder 7 commonly are shaped as part of a U within which a portion of the roof tile can be received.

At the side of the stop element 6 that is directed away from the shoulder 7, a receiving member 8 is provided in which part of a pipe (not shown in Fig. 1) can be received. Fig. 2 shows a cross-section of a part of the heat dissipation device 1 according to the present invention. The receiving member 8 has a partially circular shape, wherein the circular segment that is made up by the material of the receiving member 8 is larger than 180° in this embodiment. As a consequence, the pipe 9 can be clamped solidly inside the receiving member 8. Due to keeping the width of the opening towards the receiving member 8 smaller than the thickness of the pipe 9, an adequate locking up of the pipe 9 inside the receiving member 8 is ensured. In the figures, the opening at the top side in the receiving member 8 is shown. The opening may also be directed away from the stop element 6 or may be directed downwards.

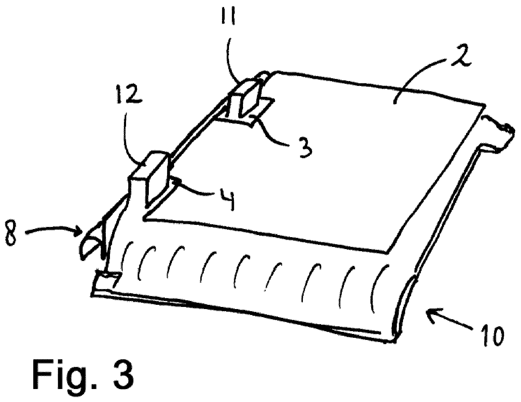

Fig. 3 shows a perspective view of a heat dissipation device 1 according to the present invention wherein a roof tile 10 is locked up in the locking member 6. Lugs 11, 12 of the roof tile 10 are received in the recesses 3, 4. Since in the embodiment shown in the drawing, the lug 12 is positioned at the side of the roof tile 10, the recess 4 at the side of the heat conductive member 2 is open.

During use, the pipe 9 in the receiving member 8 will be placed below a next roof tile, such that it is protected well against heat loss towards the environment.

The invention is not limited to the embodiments described herein and as shown in the figures. The invention is limited solely by the appending claims.

The invention also encompasses all combinations of features that have been described independently from each other.

## Claims

1. A heat transport system for a roof, comprising a heat dissipation device with a heat conductive member and a receiving member connected thereto in a heat conducting relationship for receiving a pipe embodied for flowing there through a fluid for dissipating heat energy that is absorbed by said member, **characterized in that** the heat conductive member is embodied for positioning between a roof covering and the roof, and **in that** the member comprises at least a provision, for example a recess, for receiving a suspension member of the roof covering.

2. A heat transport system according to claim 1, wherein the roof covering is comprised of a roof tile and the suspension member is a suspension lug of the roof tile.

3. A heat transport system according to claim 1, wherein the heat conductive member is embodied for positioning against a roof side of the roof covering and the receiving member is positioned near the at least one provision, for example the at least one recess, for said suspension member.

4. A heat transport system according to claim 1, 2 or 3, wherein the receiving member has a cross section shaped as a segment of a circle with an angle of between 180° and 260°, preferably between 180° and 220°.

5. A heat transport system according to claim 1, 2, 3 or 4, comprising a heat conductive material with a thermal conductivity of at least 0.5 W/mK, preferably chosen from a metal, preferably at least one of aluminum and copper.

6. A heat transport system according to claim 5, wherein the heat conductive member and the receiving member are comprised of at least one of aluminum and copper.

7. A heat transport system according to any of the preceding claims, wherein the heat conductive member extends in a first main plane and comprises near the edge that is positioned near the at least one provision, for example the at least one recess for said suspension member, a locking member for receiving therein part of the roof tile.

8. A heat transport system according to claim 7, wherein the locking member is comprised of a stop element that extends from the heat conductive member and a shoulder connected to the stop element at a distant from said heat conductive member for locking up at least part of the roof tile between the heat conductive member and the shoulder.

9. A heat transport system according to claim 7 of 8, wherein the receiving member is coupled to the locking member.

10. A heat transport system according to any of the claims 8-9, wherein the shoulder is positioned substantially parallel with respect to said main plane.

11. A method for dissipating heat from a position between a roof and a roof covering, in particular a roof tile, using the heat transport system according to any of the previous claims, comprising the step of positioning the heat dissipation device against the roof covering, positioning a suspension lug of the roof covering in the at least one provision, and suspending the roof covering from a tile lath, such that the heat conductive member is positioned between the roof and the roof covering, and positioning a pipe in the receiving member, said pipe comprising a fluid flowing there through for dissipating heat energy absorbed by said member.

12. A method according to claim 11, comprising the step of positioning on a roof a series of roof tiles with a heat dissipation device beneath at least some of said roof tiles, and positioning in the receiving members of the heat dissipation devices a pipe with a fluid flowing there through for dissipating heat energy that has been absorbed by said member.

13. A method according to claim 11, comprising the step of placing on a roof a series of solar panels with a heat dissipation device beneath at least part of the solar panels, and positioning in the receiving members of the heat dissipation devices a pipe with a fluid flowing there through for dissipating heat energy that was absorbed by said member.

14. A method according to any of the claims 11, 12 and 13, further comprising adding the fluid that is heated in the pipe to a heat exchanger, preferably to a heat pump.

15. A method according to claim 14, further comprising the step of returning to the pipe fluid that is received from the heat exchanger.
